# EUROPEAN PATENT APPLICATION

(11) **EP 4 541 456 A1**
(43) Date of publication of application: **23.04.2025**
(21) Application number: 23203718.4
(22) Date of filing: 16.10.2023
(51) Int. Cl.: B01J 8/02, B01J 8/06, B01J 19/24, B01J 3/03, B01J 3/04, B01J 19/00, B01J 19/32, B01J 19/18

(54) **DIFFERENTIAL RECYCLE REACTOR**

(71) Applicant: BASF SE, 67056 Ludwigshafen am Rhein (DE)
(72) Inventor: Drechsler, Carsten, 67056 Ludwigshafen am Rhein (DE); Heidebrecht, Peter, 67056 Ludwigshafen am Rhein (DE); Trimborn, Florian, 67056 Ludwigshafen am Rhein (DE); Joa, Andreas, 67056 Ludwigshafen am Rhein (DE); Haip, Wolfgang, 67056 Ludwigshafen am Rhein (DE); Hammen, Oliver, 67056 Ludwigshafen am Rhein (DE); Karpov, Andrey, 67056 Ludwigshafen am Rhein (DE)
(74) Representative: Kudla, Karsten

(57) **Abstract**

The invention relates to a differential recycle reactor comprising two reactor tubes (3, 5) which are connected at each end with a bent tube (9, 11), forming a closed loop, a reactant feed with a nozzle (37) through which a reactant stream is injected into a first of the reactor tubes (3), and a product withdrawal point (38), wherein a catalyst can be placed in a second of the reactor tubes (5), the product withdrawal point (38) being located such that components being injected into the reactor (1) flow at least one time through the catalyst before reaching the product withdrawal point (38), wherein the reactor tubes (3, 5) are holes formed in a housing (6) and separated by a dividing wall (7).

## Description

The invention relates to a differential recycle reactor comprising two reactor tubes which are connected at each end with a bent tube, forming a closed loop, a reactant feed with a nozzle through which a reactant stream is injected into one of the reactor tubes, and a product withdrawal point, wherein a catalyst can be placed in the second of the reactor tubes, the product withdrawal point being located such that components being injected into the reactor flow at least one time through the catalyst before reaching the product withdrawal point.

Such differential recycle reactors are for example used to analyze chemical reactions, because they provide a powerful toolkit to accurately perform kinetic measurements of full-shape catalysts under defined conditions. Chemical reaction kinetics are one of the most important characteristics of a chemical system, with applications reaching from basic catalyst design to process modeling. The reaction kinetics for example can provide a detailed insight into the reaction basics and might be used as a tool to predict characteristic parameters like conversion or selectivity. However, whilst being very powerful if accurately determined, setting up appropriate kinetic models and providing accurate experimental data to determine the parameters of those models is challenging. Basic decisions, e.g., if micro-kinetics or macro-kinetics are to be considered, can significantly influence the experimental procedure and evaluation of the data sets obtained. In this context, the term "micro-kinetics" refers to the pure reaction step in the absence of transport effects, and the term "macro-kinetics" refers to the lump transport effects and micro-kinetics to an effective kinetic expression. Reasoned in the complexity of the thermo-physical reaction system and experimental setting, assumptions need to be taken to limit the complexity of the modelling required. These limit the range of validity of the kinetic model determined. This motivates use of an experimental setting that ensures very defined conditions like isothermal operation, that reduces required assumptions and uncertainties to a minimum.

Differential recycle reactors aim to provide very defined conditions under which information with respect to the reaction kinetics can be experimentally obtained. In contrast to plug flow-type reactors, which intrinsically show profiles in, for example, the concentration of chemical species along the axial coordinate of the reactor, operation in continuously stirred tank reactor mode is targeted at in differential recycle reactors. To ensure operation in continuously stirred tank reactor mode, intensive mixing of the fluid inside the reactor is required. This requirement can be fulfilled via an intensive recycling of the fluid, such that the ratio between the recycled flow in the reactor and reactant flow is large, for example larger than 20.

Presently, different types of differential recycle reactors in laboratory scale or pilot plant scale have been used for analyzing chemical reactions and in this context to verify analytic models. Typical differential recycle reactors for example are jet loop reactors or Berty-type reactors. In a Berty-type reactor, recirculation is generated inside the reactor by creating a driving force for the fluid inside the reactor, for example by an impeller. Such a Berty-type reactor is described for example in DE-U 20 2014 006 675. In a jet-loop reactor, recirculation usually is generated by injecting the fluid reactants through a nozzle into the reaction chamber creating a high momentum flow.

To provide a recycle flow, jet loop reactors for example comprise a central tube arranged in a housing and a feed nozzle through which reactants are fed into the reactor. The nozzle generally is arranged centrally below the tube so that by injecting the reactants through the nozzle a flow through the tube is generated. At the end of the tube, the reactants are deflected and flow into the opposite direction in an annular duct surrounding the tube. In the annular duct, a catalyst may be arranged. Such jet loop reactors are described for example in Blenke, H., Bohner, K., Schuster S., "Beitrag zur optimalen Gestaltung chemischer Reaktoren", Chemie-Ing.-Techn., Vol. 37, 1965, Nr. 3, pages 289 to 294, in Blenke, H., Bohner, K., Hirner, W., "Druckverlust bei der Strömungsumlenkung um 180° im Schlaufenreaktor", Chemie-Ing.-Techn., Vol. 42, 1970, Nr. 7, pages 479 to 480, in Blenke H., Bohner K., Pfeiffer, W., "Hydrodynamische Berechnung von Schlaufenreaktoren für Einphasensysteme", Chemie-Ing.-Techn., Vol. 43, 1971, Nr. 1+2, pages 10 to 17, or in Sommers, H., "Optimale Auslegung von Kreislaufreaktoren für Gasreaktionen", Chemie-Ing.-Techn., Vol. 43, 1971, Nr. 21, pages 1176 to 1183.

Differential recycle reactors in the form of a closed tube, forming an O, are described for example in Fuchs, S., Hahn, T., "Construction and application of a jet-stirred loop reactor - Aufbau und Anwendung eines Kreislaufreaktors mit Gasstrahlpumpe", Chemical Engineering and Processing, 32 (1993), pages 225 to 231, or Nagaraj, A., Vasilev, M., Mills, P.L., "Novel-Jet Loop Reactor for Gas-Solid catalyzed kinetic Studies using Commercial Size Particles", conference contribution on NASCRE4, Houston, Texas, March 10 -13, 2019, Session 19, Industrial Case Studies and Applications. It is, however, difficult to achieve a homogeneous temperature profile, when using such closed tubes forming an O.

Further examples of recycle reactors including types of Berty-type reactors are described in Hesselbarth, B., Adler, R., "Differenzialreaktoren zur Gewinnung reaktionskinetischer Daten für festbettkatalytische Reaktionen - Teil 1: Ausführung und Einsatz", Chemie Ingenieur Technik, 2004, 76, No. 7, pages 914 to 924, in Luft, G. Römer R., Röder H., "Kreislaufapparaturen für reaktionskinetische Messungen", Chemie-Ing.-Techn., Vol. 45, 1973, Nr. 9 + 10, pages 596 to 602, or in Berty, J.M., Testing Commercial Catalysts in Recycle Reactors, Catalysis Reviews Science and Engineering, 20(1), 1979, pages 75 to 96.

It is a disadvantage of common jet loop reactors and Berty-type reactors that the flow is split up when leaving the central tube which may result in a nonuniform flow, for example in the annular duct. Further, a comparatively large amount of catalyst is used in common jet loop reactors, in which the catalyst is commonly placed in the annular duct. Further, in a common jet loop reactor, to minimize wall effects the width of the annular duct increases with the size of the catalyst particles. Such an increased width of the annular duct has the disadvantage that the fluid flowing in the reactor has a comparative low flow velocity when flowing through the annular gap and a high velocity when flowing inside the tube. This additionally results in non-uniform flow, e.g., in the catalyst and high pressure losses.

Therefore, it was an object of the present invention to provide a differential recycle reactor in which a homogeneous flow in the catalyst can be realized, and which further allows a homogeneous temperature profile.

This object is achieved by a differential recycle reactor comprising two reactor tubes which are connected at each end with a bent tube, forming a closed loop, a reactant feed with a nozzle through which a reactant stream is injected into a first of the reactor tubes, and a product withdrawal point, wherein a catalyst can be placed in a second of the reactor tubes, the product withdrawal point being located such that components being injected into the reactor flow at least one time through the catalyst before reaching the product withdrawal point, wherein the reactor tubes are holes formed in a housing and separated by a dividing wall.

The design of the reactor with two reactor tubes being connected at each end by bent tubes to form a closed loop has the advantage that it is possible to achieve a constant diameter of the tube in the whole reactor, i.e. that the reactor tubes and the bent tubes have the same inner diameter. By this constant diameter, also a homogeneous flow in the reactor and the catalyst is achieved. Further, forming the tubes in the same housing has the additional advantage that a homogeneous temperature profile can be achieved. This is supported by the dividing wall which separates the reactor tubes, because heat can be directly exchanged from one reactor tube to the other, which also results in a homogenization of the temperature profile. Further, by placing the reactor tubes and the bent tubes in only one housing, it is possible to provide a homogeneous heat exchange of the whole reactor and, thus, a further homogenization of the reaction mixture flowing in the closed loop.

Like in the known circular tube reactors, and in difference to common jet loop reactors, there is no flow splitting and only one path for the fluid flowing in the reactor. Due to the smaller cross sectional area compared to the cross sectional area of the annular duct in the common jet loop reactor, the inventive differential recycle reactor has a smaller reactor surface, which is relevant for wall reactivity.

Compared to a tube reactor in the shape of a closed loop, the inventive differential recycle reactor has the advantage that a more compact design is possible, because the bent tubes may have any radius of curvature, whereas for tubes a minimum curvature exists depending on the tube diameter. It is a further advantage of the compact design that the smaller fluid hold-up allows for more exact measuring due to a shorter residence time.

Additionally, for heating or cooling the tube it is necessary to provide suitable temperature-control devices, for example a heating belt or cooling belt around the tube or a tube-in-tube design with the annular duct formed between the inner and the outer tube being a heating or cooling jacket. Further, it is possible to form the tube in a metal block, which is heated or cooled, for example by a heating or cooling belt, a heating or cooling cartridge or by providing a channel in the metal block through which a heating or cooling medium flows. However, in difference to the inventive reactor, the respective heating or cooling devices must surround all tubes which results in a larger distance between the reactor tubes of the loop and, thus, a less compact design.

The flow in the differential recycle reactor is generated by injection of the reactants into the loop. Therefore, the reactor needs no moving parts in difference to a Berty-type reactor. This has the advantage that there is no energy needed for actuating the moving parts, for example a turbine or a rotor and, further, less maintenance efforts. Additionally, there is no need for flushing a turbine seal, e.g. with an inert gas, and since there are no turbine bearings, there is also no risk for leakage of lubricants which may result in undesirable additional and probably undefined media in the reaction system.

The design of the inventive differential recycle reactor has further the advantage that it enables analysis of large-size, full-shape catalysts and operation at very high space velocities (GSHV) due to the possible lower pressure loss and possible higher velocities in the catalyst compared to a common jet loop reactor.

To allow a change of the catalyst in the reactor and for cleaning purposes, there should be an access to the interior of the tubes. For this purpose, it is preferred if the housing comprises a lid for closing. For forming the bent tube, it may be possible to provide a displacer element in which the bent tube is formed, to place the displacer element on the part of the housing with the reactor tubes. Afterwards, the displacer element is fixed with the lid. However, in a preferred embodiment, a recess is formed in the lid, which forms the bent tube when fixed on the part of the housing with the reactor tubes.

It is possible to form only the reactor tubes in a central part of the housing and to close both ends with a lid. In this case, both lids may have the same design or the lids may be different, for example to close one end of the central part of the housing with the displacer element in which the bent tube is formed and to fix the displacer element with a lid and to close the other end of the central part of the housing with a lid in which a recess is formed that forms the bent tube when fixed on the central part of the housing with the reactor tubes. However, if both ends are closed with a lid it is preferred to use the same kind of lid on both ends and particularly preferably both ends of the central housing are closed with the lid with a recess which forms the bent tube in connection with the edge of the dividing wall, which forms the inner bend of the bent tube, when fixed on the central part of the housing.

Besides a central part comprising the reactor tubes being closed on both ends with a lid, it is also possible and preferred to form the reactor tubes and one connecting bent tube in a lower part of the housing and to close the housing with a lid, preferably with a lid comprising the recess for forming the other bent tube.

Independently of whether the housing comprises one lid or two lids, each lid may have a curved shape or a flat shape. If the lid has a curved shape, it is preferred that the recess formed in the lid has a constant wall thickness. On the other hand, the lid may have a flat outer surface, if the recess has an increasing wall thickness from the center of the lid to the rim or, particularly, if a displacer element is comprised in which the recess is formed.

The central part of the housing, in which the reactor tubes are formed, may have any suitable cross sectional area in which the reactor tubes can be formed. The central part of the housing for example may have a circular cross sectional shape, an oval cross sectional shape or a rectangular cross sectional shape. However, besides a circular shape, an oval cross sectional shape or a rectangular cross sectional shape, the housing may have any suitable shape which may include two reactor tubes.

If the central part of the housing has a circular cross sectional shape, the housing has a comparable large amount of material surrounding the tubes, which may serve as a heat buffer and, thus, support a homogeneous temperature distribution in the reactor.

To reduce the material of the housing, an oval cross sectional shape is preferred. Even such an oval cross sectional shape may provide a sufficient large amount of material that the housing may serve as a heat buffer.

According to the invention, the reactor tubes are separated by a dividing wall. This means that the reactor tubes share a common wall. The thickness of the dividing wall is selected such that there is no deflection of the wall during operation of the reactor. Further, if it is intended to allow a heat transfer between the reactor tubes, for example to provide a homogeneous temperature, it is preferred to design the dividing wall with a small wall thickness. If it is intended to use the housing of the reactor as a heat buffer, it may be advantageous to design the dividing wall with a larger wall thickness.

Besides serving as a heat buffer, it is further preferred that the housing of the differential recycle reactor is temperature-controllable. For this purpose, it is for example possible to integrate heating or cooling devices in the housing. Such heating or cooling devices for example are electrical heating or channels through which a heating or cooling medium can flow. Particularly if the housing has a rectangular cross sectional shape, it is further possible to place heating cartridges in the housing.

Particularly if the housing has a circular or an oval cross sectional shape, the walls formed by the housing have a sufficient thickness to include channels through which a heating or cooling medium may flow. If the distance between the channels for the heating or cooling medium and the reactor tubes is sufficiently large to achieve a constant temperature of the material of the housing by heat conduction, it is further possible that the material of the housing serves for homogenizing the temperature. For this purpose, it is particularly preferred to use a material for the housing which has a good heat conductivity, for example steel, aluminum based alloys, or other metal based compounds. To avoid injuries of personnel working on the reactor, it is further preferred to provide a heat insulation around the reactor, particularly if the reactor is made of a material with good heat conductivity.

As an alternative to channels in the housing through which a heating or cooling medium flows, it is also possible to realize heating or cooling by using heating belts or heating cartridges, by using a heating or cooling jacket or, particularly for laboratory size reactors, to place the whole reactor in a heating or cooling cabinet.

Particularly if the reactor is in laboratory size and the reaction is operated at high pressures, it may be preferred to enclose the housing by an outer casing to ensure safe operation. The outer casing additionally or alternatively may seal the reactor to prohibit material to leak from the reactor.

For fixing the lid on the housing, any suitable type of connection which is known to those skilled in the art and which allows for a fluid tight sealing may be used. For example, the part of the housing enclosing the reactor tubes may comprise a flange to which the lid is screwed. This allows for a fluid-tight connection of the lid to the central part of the housing comprising the reactor tubes, which further is releasable to allow opening the reactor tubes for maintenance and changing the catalyst. For achieving the fluid tight connection, it is further preferred to provide a sealing, for example by tongue and groove and/or by metal flat gaskets. Suitable sealing that may be used depend on the reactions carried out in the reactor. Materials for the sealing may be for example steel, stainless steel, alloys based on aluminum, copper or nickel, or any other metal based alloy.

The material of the housing of the reactor may be for example a metal, glass or ceramic, preferably metal or glass. If the housing is made of a metal, suitable metals are for example steel, stainless steel or aluminum, alloys based on aluminum, copper or nickel, or any other metal based alloy.

For analyzing reactions, the inventive differential recycle reactor may have laboratory size or pilot plant size. If the differential recycle reactor has laboratory size, the reactor may be made of glass or a metal, and if the differential recycle reactor has pilot plant size, the reactor preferably is made of a metal.

Laboratory size in this context means a reactor volume, i.e. the volume enclosed by the tubes, of below one liter up to a few liters, preferably 0.02 to 5 liters and particularly 0.02 to 1 liter. On the other hand, pilot plant size means a reactor volume of preferably 1 to 50 liters and particularly 1 to 5 liters.

The diameter of the tubes in a laboratory size reactor preferably is in a range from 4 to 40 mm and particularly in a range from 6 to 30 mm, and the diameter of the tubes in a pilot plant reactor preferably is in a range from 12 to 80 mm and particularly in a range from 20 to 60 mm.

It is a further advantage of the inventive reactor, that due to the constant diameter of the tubes, an easy upscaling is possible. Further, besides the above described laboratory size or pilot plant size, the reactor also may be in industrial size.

Independently of whether the reactor is in laboratory size, pilot plant size or industrial size, it is preferred to place sensors for measuring reaction conditions in the housing, the tubes and/or the reactor inlet and/or the reactor outlet.

Suitable sensors for example are temperature sensors which may be arranged in the housing for measuring the temperature of the housing, in the housing ending close to the tubes for measuring the temperature of the fluid at the walls of the reactor or extending into the tube for measuring the temperature of the fluid at defined positions. Using temperature sensors extending into the tube is particularly preferred in laboratory size reactors or pilot plant size reactors to gather temperature data which show the temperature profile in the reactor. In industrial size reactors, temperature sensors close to the wall may be sufficient for monitoring the reaction. The temperature sensors for measuring the temperature of the fluid in the reactor, those located close to the wall as well as those extending into the reactor, further may be located downstream the catalyst, upstream the catalyst, in the catalyst bed or at any arbitrary position in the reactor. Further, temperature sensors may be located at the reactor inlet, preferably before the nozzle through which the reaction mixture is injected into the reactor, at the reactor outlet, for example in an outlet tube, or at the outer surface of the reactor, e.g. for control of heating or cooling devices.

Further suitable sensors are pressure sensors or sensors for measuring the composition of the fluid in the reactor. For pressure sensors and sensors for measuring the composition of the fluid in the reactor, it is necessary that the sensor is in contact with the fluid in the reactor, wherein pressure sensors also may be arranged at the wall of the tubes, for example by using a membrane forming the wall at the position of the sensor and placing the sensor directly behind the membrane. Such a position may be particularly preferred for pressure sensors used in industrial size reactors. Further, for gathering pressure profiles or concentration profiles, it is necessary to place sensors at different positions in the tubes.

Pressure sensors preferably are located at comparable positions as the temperature sensors, for example above the catalyst, below the catalyst, in the catalyst bed or at any arbitrary position in the reactor. Further, it is preferred to place pressure sensors at the reactor inlet before the nozzle and/or at the reactor outlet, for example the outlet tube.

Due to the intense mixing in the region of the jet, the high circulation ratio in the reactor and the rapid mixing of the components in the flow, generally there will be a widely homogeneous composition in the reactor. For this reason, generally it will be sufficient to locate sensors for measuring the composition at the reactor inlet and at the reactor outlet, for example the outlet tube. However, if it is for example intended to analyze whether the assumption that there is a widely homogeneous composition in the reactor, it is also possible to locate sensors for measuring the composition at any position in the flow path in the reactor.

Sensors which can be used for gathering temperature, pressure and the composition of the mixture in the reactor may be any suitable sensors known to a skilled person. Temperature sensors may be for example thermocouples, thermistors or resistance thermometers. Further, temperature sensors may be single point elements or multi point elements. Pressure sensors used may be of any type known to the skilled person. If the position of the pressure sensor is in the flow path of the reaction mixture in the reactor, it is preferred to use a pressure sensor having a small cross sectional area, to minimize effects of the sensor on the flow in the reactor.

For determining the composition of the reaction mixture, any method of inline or online measurements known to those skilled in the art may be used. Offline measurements also may be used but are less preferred. Suitable measurement methods for measuring the composition of the reaction mixture may be for example spectroscopic or chromatographic methods like infrared (IR) spectroscopy, Fourier-transformation infrared (FTIR) spectroscopy, near-infrared (NIR) spectroscopy, ultraviolet-visible (UV-VIS) spectroscopy, Raman spectroscopy, gas chromatography (GC), gas chromatography - mass spectroscopy (GC-MS) or any other suitable method.

For protecting the sensors which are extending into the reactor, for example if the reaction mixture contains aggressive media which may destroy the sensor, or if the sensor may be deformed by the reaction mixture, for example due to the flow velocity in the reactor, it is preferred to place these sensors in safety tubes. By the safety tube, a direct contact of the sensor with the reaction mixture is avoided and, if the sensor may be deformed due to the flow velocity in the reactor, the safety tube is made of a sufficient stable material or has a sufficient wall thickness to not being deformed.

The inventive differential recycle reactor is particularly used for carrying out heterogeneously catalyzed chemical reactions. For this purpose, the reactor contains a fixed bed catalyst or a catalyst element with channels or pores, for example a monolith, containing the catalytic active material. For accommodating the catalyst in the reactor, it is preferred that one of the reactor tubes comprises a support onto which the catalyst can be placed. The support may be a sieve tray, a ring, a structure comprising beams, a basket or any other tray with openings through which the reaction medium can flow. Preferably, the tray is a sieve tray. However, besides these supports, alternative support structures for the catalyst may be used, for example quartz wool, glass wool or metal wool.

As an alternative or additionally, it is possible to place the catalyst in a basket which is placed into one of the reactor tubes. In this case, the basket may be fixed by any suitable method, known to the skilled person in the tube, for example by providing an annular protrusion in the tube or at least one rod which is arranged perpendicular to the main axis of the tube as a support, and to set the basket on the support. Besides the annular protrusion or the rod, any other suitable support can be used onto which the basket can be placed. Such a support for example also may be a tray. Besides a support onto which the catalyst is placed, it is also possible to provide hanging devices in the tube and to hang the basket on the hanging device.

If the catalyst is in the shape of a monolith, the same supports for placing the catalyst may be used as described above for the basket.

If the catalyst comprises packings, these may be fixed by a net or a basket to form a fixed bed or may be a random packing. In this case it is also possible to directly fill the packing on the tray. However, to facilitate a catalyst change, it is preferred to use a fixed bed in which the catalyst packing is fixed by a net or basket.

The packing may have any suitable shape, known to a skilled person, for example spherical, cylindrical or in the shape of hollow cylinders, rings like Raschig rings or Pall rings, multilobes, wagon wheels, extrudates, e.g. shaped bodies, or saddles. Further, the catalyst may be in the shape of tablets or crushed particles.

Independent of the shape of the catalyst, the catalyst may comprise a support with a catalytic active material or may consist of the catalytic active material. However, generally, the catalyst comprises a support with a catalytic active material. The catalytic active material which can be used depends on the reaction to be carried out in the reactor and is known to a skilled person.

The catalyst may be placed at any suitable position in the reactor. However, it is particularly preferred to arrange the catalyst in one of the reactor tubes. In this case it is further preferred that the nozzle opens into the other reactor tube, i.e. that reactor tube which does not contain the catalyst. This has the advantage that the flow path has a sufficient length for mixing the components and achieve a homogeneous temperature and composition before entering the catalyst.

Besides using only one catalyst bed, it is also possible to use multiple catalyst beds at different positions in the reactor, for example to drive back the influence of temperature change during the reaction in case of strong release of heat of reaction. By using more than one catalyst bed, an intermediate cooling of the reaction mixture between the catalyst beds is possible. Such an interruption of the reaction also may be realized by a packed bed in which sections with catalytically active material and without catalytically active material alternate.

The tubes forming the loop may have any suitable cross sectional shape. Preferably, the tubes have a circular, oval or rectangular shape, a circular shape being particularly preferred. The bent tubes, which connect the reactor tubes, may have a semi-circular shape or may be flattened. Preferably, the bent tubes have a semi-circular shape, so that the cross sectional shape of the hole tube forming the loop is constant. Besides a constant cross sectional area along the whole loop, it is also possible that the cross sectional area and/or the cross sectional shape varies. It is for example possible that the cross sectional area of the tube increases at the position of the catalyst to reduce the flow velocity in this part of the loop and, thus, decrease the pressure loss in the catalyst bed, which allows for a higher recirculation, and increase the dwell time of the reaction mixture in the catalyst. The decrease of the flow velocity in the catalyst bed has the additional advantage of a lower pressure loss and a higher recirculation.

The nozzle through which the fluid is injected into the reactor may be any suitable nozzle for injecting fluids into a reactor. The nozzle may be for example of the type a nozzle in a common jet loop reactor is. The nozzle for injecting the fluid may be at any suitable position in the reactor. Further, particularly, if it is intended to analyze different reaction parameters, it may be useful to provide nozzles at different positions in the reactor. Further, if multiple nozzles are used, it is possible to arrange the nozzles at different angles or, alternatively, to provide one nozzle which is swivel mounted to realize different angles. Particularly if only one nozzle is used, it is preferred if the nozzle is such that the gas flows top-down through the catalyst bed to avoid fluidization of the catalyst. However, particularly if the catalyst is fixed in a basket or a net in the reactor, it is also possible to arrange the nozzle such that the fluid flows from bottom to the top of the catalyst bed.

Particularly if multiple nozzles are used, it is possible to feed each reactant via one nozzle into the reactor. However, it is preferred to feed all reactants through one nozzle. In this case the reactants may be mixed in a mixing device upstream the nozzle or, alternatively, in the nozzle. For this purpose, each reactant is fed by a feeding line into the nozzle, so that the reactants come into contact when entering the nozzle.

To avoid formation of side products, e.g. coke formation, or fouling or to suppress background reactivity, it may be preferred to treat the surfaces which may come into contact with the fluid flowing in the reactor, particularly all inner walls of the tubes forming the loop, the catalyst basket, if present, and, optionally, also the nozzle. Suitable surface treatments for example are coating, oxidizing, impregnating or depleting the surfaces. If the surfaces are coated, it is preferred to use a material for the coating which is chemical inert to components in the reaction mixture and which further has a high wear resistance, to avoid that coating material peels off and pollutes the fluid in the reactor, or that components of the fluid in the reactor react with the coating. Suitable coatings are for example amorphous silicon, optionally with oxygen and carbon The coating for example may have a thickness in a range from 100 to 1600 nm to avoid an influence on the design process, for example sealings or nozzle design, and may be applied for example by a chemical vapor deposition (CVD) process.

For improving the mixing of the components in the reactor, it may be advantageous to provide additional mixing elements in the reactor, particularly static mixing elements.

The reactor may be positioned at any angle relative to the ground. Preferably, the reactor has a vertical or horizontal orientation, i.e. is positioned at an angle of 90° or of 0° relative to the ground.

The reactor may be used for example for determining characteristics of the fluid flow like flow velocities, volume flows, the gas hourly space velocity (GHSV) or flow regimes (laminar or turbulent) and operation parameters like temperature, pressure and the composition of the fluid flowing in the reactor.

Reactions that may be carried out in the reactor may be any reaction which comprises at least a gas phase or a liquid phase, for example gas phase reactions, liquid phase reactions, gas/liquid reactions, or even gas/solid, liquid/solid or gas/liquid/solid reactions, if the solids in the reactor are not a catalyst but react with components in the gas phase and/or in the liquid phase, in the presence of a catalyst or without a catalyst. Particularly preferably, the reactions carried out in the reactor are gas phase reactions in the presence of a solid catalyst. Typical examples comprise heterogeneously catalyzed reactions of gaseous species, for example hydrogenation or oxidation reactions of hydrocarbons, such as hydrogenation of acetylene to ethylene or oxidation of ethylene to ethylene oxide.

Embodiments of the invention are shown in the figures and described in more detail in the following description.

In the figures:

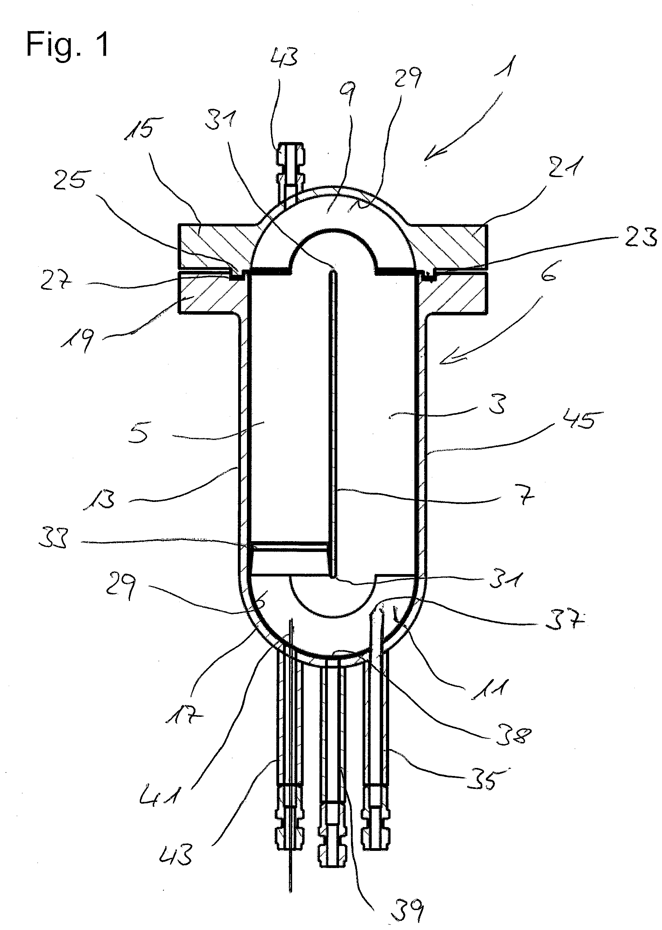

- Figure 1: shows a cross sectional view of a differential recycle reactor;

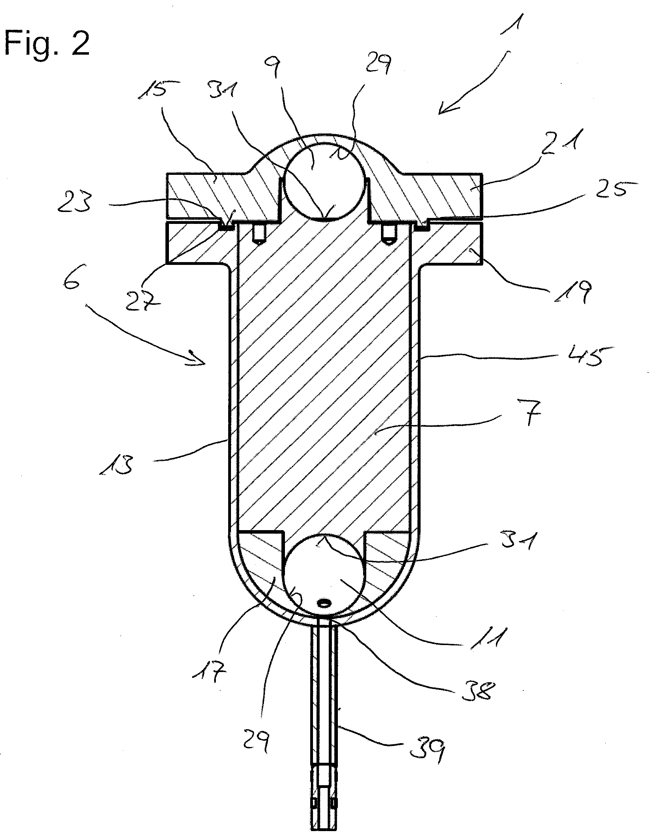

- Figure 2: shows a cross sectional view of the differential recycle reactor of figure 1 rotated by 90°;

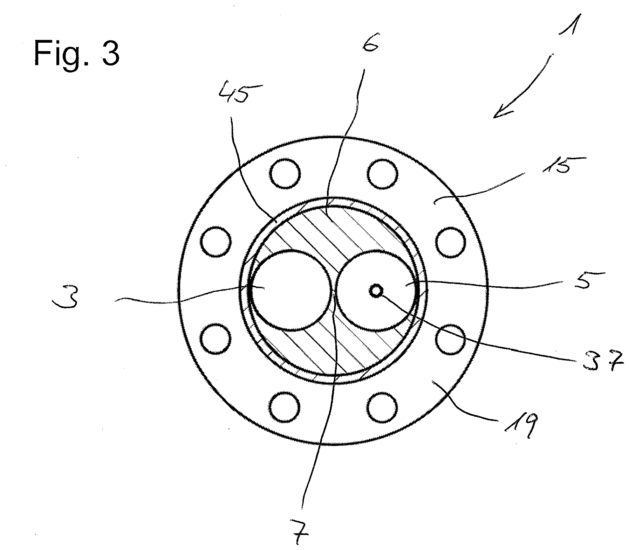

- Figure 3: shows a top view on the differential recycle reactor without lid.

A differential recycle reactor 1 according to the invention comprises a first reactor tube 3 and a second reactor tube 5 which are arranged in parallel in a housing 6. The reactor tubes 3, 5 are separated by a dividing wall 7. A first bent tube 9 and a second bent tube 11 connect the reactor tubes 3, 5, thereby forming a closed loop.

The housing 6 comprises a central part 13 in which the reactor tubes 3, 5 are formed. The central part 13 is closed by a removable lid 15 on one end and by a fixed lid 17 on the other end. The fixed lid is attached to the central part 13 of the housing 6 for example by welding.

The removable lid 15 may be attached to the central part 13 of the housing 6 by any suitable method known to the skilled person. The removable lid 15 may be attached to the central part 13 of the housing 6 for example by bayonet coupling, screwing or with clamps. If the removable lid 15 is attached to the housing 6 by screwing, it is for example possible to form an external thread on the central part 13 of the housing 6 and an internal thread in the removable lid 15 and to screw the removable lid 15 on the housing. However, for attaching the removable lid 15 to the central part 13 of the housing 6 by screwing, it is preferred to provide flanges 19, 21, which are connected by screws.

For providing a fluid-tight connection between the central part 13 of the housing 6 and the removable lid 15, any suitable sealing device may be used. If the central part 13 of the housing 6 and the removable lid 15 are connected by flanges 19, 21 as shown here, a flat seal may be placed between the flanges 19, 21. In a preferred embodiment, a groove 23 is formed in one flange 19 and a tongue 25 in the other flange 21. In the groove 23 a flat sealing 27 is placed. The flat sealing may be for example a metal flat gasket.

In the embodiment shown in the figures, the bent tubes 9, 11 are formed by recesses 29 in the lids 15, 17. Each recess 29 is semicircular, forming the outer bend of the bent tubes 9, 11. The inner bend of the bent tubes 9, 11 is formed by the edges 31 of the dividing wall 7.

For placing a catalyst in the reactor 1, a tray 33 is located in the second tube 5. The tray 33 for example is a sieve tray. However, the tray 33 may be of any other kind, which allows the fluid in the reactor to flow through, and which is known to a skilled person. Besides a tray 33 for placing a catalyst in the reactor, any other device for placing and fixing a catalyst may be used, for example an annular protrusion, rods or hanging devices. However, annular protrusions, rods or hanging devices only are suitable if the catalyst is a fixed bed, for example in a basket or a net, or a monolith. A tray 33 particularly is used if the catalyst is a packed bed, where the packing is placed directly on the tray.

To operate the reactor, it is necessary to continuously feed reactants into the reactor 1. By feeding the reactants, a fluid flow in the reactor is induced. The reactants are fed into the reactor 1 by a reactant feed 35. For achieving a sufficient flow velocity to induce the fluid flow in the reactor and a rapid mixing of the reactants with the fluid being recycled in the reactor 1, the reactants usually are injected into the reactor through a nozzle 37. After being injected, the reactants flow upwards in the first tube 3 and mix with the reaction mixture in the reactor. When reaching the upper end of the first tube 3, the reaction mixture is deflected by the bent tube 9 and flows into the second tube 5 at its upper end. Afterwards the reaction mixture flows through the second tube 5 into the second bent tube 11 in which it is deflected and flows back into the first tube 3 where it is mixed with newly fed reactants. In the second tube 5, a catalyst may be placed on the tray 33, so that the reaction mixture flows through the catalyst in which the chemical reaction takes place.

For keeping a steady state in the reactor 1, it is necessary to withdraw reaction mixture in the same amount as reactants are fed into the reactor 1. For this purpose, the reactor 1 comprises a product withdrawal point 38, which is connected to an outlet tube 39 for product removal.

For determining reaction parameters like temperature, pressure or composition of the reaction mixture flowing in the reactor 1, it is preferred to use sensors 41. For introducing sensors 41 into the flow path formed by the tubes 3, 5, 9, 11, it is possible to provide access tubes 43 as shown here.

Depending on the parameters to be gathered, the sensors 41 may be for example temperature sensors, pressure sensors or sensors for measuring the composition of the fluid flowing in the reactor.

Besides access tubes 43 for placing sensors 41 in the flow path, it is further possible to place sensors at any other position in the housing 6 or in the reactant feed 35 or the outlet tube 39. For placing the sensors, usually access tubes at the respective positions may be used. Usually, the reactor 1 only comprises access tubes 43 at those positions where it is intended to place sensors.

As shown in the figures, the differential recycle reactor 1 may additionally comprise an outer casing 45, which encloses at least the central part 13 of the housing 6, and, if the reactor comprises the fixed lid 17 as shown here, the fixed lid 17. If such an outer casing 45 is provided, it is alternatively possible not to fix the lower lid undetachably to the central part 13 of the housing but to place the lower lid and the housing in the outer casing 45 and achieve the connection by attaching the releasable lid 15 to the outer casing 45. In this case, the lower flange 19 is part of the outer casing 45 and not of the housing 6.

Such an outer casing 45 may be provided for example as an additional safety measure to ensure a safe operation, i.e. to seal the reactor and to withstand pressure.

## Claims

1. A differential recycle reactor comprising two reactor tubes (3, 5) which are connected at each end with a bent tube (9, 11), forming a closed loop, a reactant feed with a nozzle (37) through which a reactant stream is injected into a first of the reactor tubes (3), and a product withdrawal point (38), wherein a catalyst can be placed in a second of the reactor tubes (5), the product withdrawal point (38) being located such that components being injected into the reactor (1) flow at least one time through the catalyst before reaching the product withdrawal point (38), wherein the reactor tubes (3, 5) are holes formed in a housing (6) and separated by a dividing wall (7).

2. The differential recycle reactor according to claim 1, wherein the reactor tubes (3, 5) are formed in a part (13) of the housing (6) which is closed with a lid (15, 17).

3. The differential recycle reactor according to claim 2, wherein a recess is formed in the lid (15, 17) so that the bent tube (9, 11) is formed when the lid (15, 17) is fixed on the part (13) of the housing (6) with the reactor tubes (3, 5).

4. The differential recycle reactor according to claim 2, wherein a recess forming the bent tube (9, 11) is formed in a displacer element, the displacer element being fixed on the part (13) of the housing (6) with the reactor tubes (3, 5) with the lid (15, 17).

5. The differential recycle reactor according to any of claims 1 to 4, wherein the inner diameter of the reactor tubes (3, 5) and the bent tubes (9, 11) is the same.

6. The differential recycle reactor according to any of claims 1 to 5, wherein the housing (6) is temperature-controllable.

7. The differential recycle reactor according to any of claims 1 to 6, wherein sensors (41) for measuring reaction conditions are placed in the housing (6) and/or the tubes (3, 5, 9, 11).

8. The differential recycle reactor according to claim 7, wherein at least one of the sensors (41) is placed in a safety tube.

9. The differential recycle reactor according to any of claims 1 to 8, wherein one of the reactor tubes (3, 5) comprises a bearing (33) onto which the catalyst can be placed.

10. The differential recycle reactor according to any of claims 1 to 9, wherein the catalyst is placed in a basket which is placed into one of the reactor tubes (3, 5).

11. The differential recycle reactor according to any of claims 1 to 10, wherein a mixing device is arranged in the reactant feed upstream the nozzle (37).

12. The differential recycle reactor according to any of claims 1 to 11, wherein the housing (6) is enclosed by an outer casing (45).
